# EUROPÄISCHE PATENTSCHRIFT

(11) **EP 2 586 660 B1**
(45) Veröffentlichungstag und Bekanntmachung des Hinweises auf die Patenterteilung: **09.07.2014**
(21) Anmeldenummer: 12005342.6
(22) Anmeldetag: 21.07.2012
(51) Int. Cl.: B60R 3/00

(54) **Lauf- und Arbeitsbühne**
Walkway and work platform
Nacelle et marchepied

(30) Priorität: 26.10.2011 DE 102011116982
(43) Veröffentlichungstag der Anmeldung: 01.05.2013
(73) Patentinhaber: DB Waggonbau Niesky GmbH, 02906 Niesky (DE)
(72) Erfinder: Neumann, Michael, 02826 Neißeaue OT Zodel (DE); Kappler, Detlef, 02906 Niesky (DE); Göhring, Dieter, 02906 Waldhufen (DE); Kasper, Jens, 02906 Niesky (DE); Töppel, Matthias, 01877 Bischofswerda (DE)
(74) Vertreter: Zinken-Sommer, Rainer

(56) Entgegenhaltungen:
- AU-B2- 725 447
- DE-A1- 3 320 969
- US-A- 5 921 531

## Beschreibung

Die Erfindung betrifft eine Lauf- oder Arbeitsbühne mit klappbarem Geländer und Aufstiegshilfe, deren Handläufe mittels eines Verbindungselementes mechanisch gekoppelt sind.

Verschiedene Arten von Nutzfahrzeugen weisen erhöht liegende Ladungsebenen auf und / oder müssen für Be- oder Entladungszwecke sowie bei Kontrollen im Dachbereich des Fahrzeuges durch Bedienpersonal begangen werden. Zu diesem Zweck weisen diese Fahrzeuge Laufbühnen oder -stege in oftmals großer Höhe über dem Boden auf. Zum Zwecke der Arbeitssicherheit müssen diese Laufbühnen mit Absturzsicherungen - üblicherweise in Form eines Geländers - ausgestattet sein. Als Beispiel können hierfür doppelstöckige Autotransport-Fahrzeuge oder auch Tank- und Silofahrzeuge mit im Dachbereich angeordneten Befüll- und / oder Kontrolleinrichtungen genannt werden. Dies ist unabhängig von der konkreten Ausprägung des Nutzfahrzeuges als Straßen- oder Schienenfahrzeug und umfasst ganz allgemein auch alle derartigen Wechselbehälter, wie z.B. Container, sowie sonstige Arbeitsbühnen, z.B. an Montage- oder Wartungsgeräten.

Aus der DE 33 20 969 A1 sowie der US 5,921,531 A ist es sowohl für Strassenwie auch für Schienenfahrzeuge bekannt, ein derartiges Geländer zur Reduzierung der lichten Höhe des Fahrzeugaufbaus klappbar auszuführen, wobei das Geländer in Form eines aus Stützen und Längsstangen aufgebauten Parallelogrammgestänges in einer zur Längsachse des Fahrzeuges bzw. Wechselbehälters klappbar ausgeführt ist. Wenn sich das Bedienpersonal auf der Lauf- bzw. Arbeitsbühne befindet, ist das Geländer in einer sog. "Arbeitsstellung" in vertikaler Lage aufgerichtet. Nach Beendigung der Tätigkeiten des Bedienpersonals wird das Geländer hingegen in eine abgeklappte bzw. tiefliegende "Ruhestellung" gebracht und gegen unbeabsichtigtes selbsttätiges (Wieder-)Aufrichten gesichert; das Trägerfahrzeug erfüllt dann die zulässigen Lichtraummaße und kann im Verkehr bewegt werden. Bei einem derartig klappbaren Geländer sind die Geländerstützen sowohl an der Lauf- bzw. Arbeitsbühne als auch mit den Geländer-Längsstangen drehgelenkig verbunden. Das Aufstellen bzw. Abklappen des Geländers kann gemäß der Lehre der DE 33 20 969 A1 über eine Kopplung des Bühnengeländers mit einer im Wesentlichen vertikalen, zum Besteigen der Laufbühne vorgesehenen Aufstiegshilfe erfolgen, wobei die Aufstiegshilfe ein Hebelgestänge mit einer ersten Zugstange sowie einen beweglichen unteren Teil, beispielsweise in Form eines abklappbaren oder vertikal verschiebbaren unteren Teils der Aufstiegshilfe, aufweist, welcher der Beaufschlagung der ersten Zugstange mit einer Zugkraft durch einen am Boden neben dem Tankfahrzeug stehenden Bediener dient. Dabei ist das Hebelgestänge so konzipiert, das die erste Zugstange im Zuge ihrer Beaufschlagung mit einer Zugkraft mittels zweier Hebelarme von der Aufstiegshilfe weggeschwenkt bzw. abgehoben wird und auf diese Weise einen der Aufstiegshilfe zugeordneten Handlauf ausbildet. Hebelgestänge und Bühnengeländer sind mittels einer zweiten Zugstange aneinander gekoppelt. Die Zugkrafteinleitung in das Hebelgestänge bewirkt somit dessen Schwenkbewegung und damit auch eine Zugkrafteinleitung in die zweite Zugstange sowie eine Drehmomenteinleitung auf das Bühnengeländer. Eine hierzu ähnliche Lehre vermittelt die AU 725447 B. Ergänzend zur Betätigung des Geländers durch einen mit dem beweglichen unteren Ende der Aufstiegshilfe gekoppelten Mechanismus wird dort auch die Betätigung mittels eines separaten Bedienhebels offenbart. Dabei ist es allen diesen Lösungsvorschlägen gemeinsam, dass eine durch das Bedienpersonal auszuübende vertikale Verschiebungsbewegung durch entsprechende Umlenkmechanismen in eine auf das Geländer einwirkende und dort ein Drehmoment um die Fußpunkte der Geländerstützen erzeugende Horizontalkraft umgewandelt wird.

Bei allen bekannten Anwendungen derartiger Klappgeländer fehlt allerdings nach dem Aufklappen des Geländers in die Arbeitsstellung nicht nur eine für das Bedienpersonal zugängliche Halte- bzw. Griffmöglichkeit im Übergangsbereich zwischen der Aufstiegshilfe und der Lauf- bzw. Arbeitsbühne sondern auch eine Absturzsicherung im Bereich der durch die Aufstiegshilfe bedingten Lücke im Geländer. Diesbezüglich sind aus dem Stand der Technik allenfalls Behelfslösungen mittels vom Bedienpersonal einzuhängender Ketten o.ä. bekannt, auf deren Nutzung das Bedienpersonal in der Praxis aber aus Zeitgründen oder Bequemlichkeit oftmals verzichtet.

Der Erfindung liegt daher die Aufgabe zugrunde, eine Lauf- oder Arbeitsbühne mit klappbarem Geländer und Aufstiegshilfe, deren Handläufe mittels eines Verbindungselementes mechanisch gekoppelt sind, bereitzustellen, die eine zwangsgeführte, d.h. ohne zusätzliche Bedienhandlung des Personals realisierte Absicherung des Übergangsbereichs zwischen der Aufstiegshilfe und dem Geländer ermöglicht.

Erfindungsgemäß wird diese Aufgabe in Verbindung mit dem Oberbegriff des Schutzanspruches 1 dadurch gelöst, dass das Verbindungselement aus zwei miteinander in einem Gelenk drehbar gekoppelten Teilelementen besteht, wobei das erste Teilelement sowie an einem ersten zum Gelenk distal angeordneten Ende eine drehgelenkige Ankopplung zum Handlauf des Geländers und das zweite Teilelement an einem zweiten zum Gelenk distal angeordneten Ende eine drehgelenkige Ankopplung zum Handlauf der Aufstiegshilfe aufweist, wobei die Drehachsen der Drehgelenke zueinander parallel ausgerichtet sind.

Auf diese Weise wird eine Verbindung zwischen den Handläufen von Geländer und Aufstiegshilfe erreicht, welche in jeder Winkelstellung des klappbaren Geländers und insbesondere in dessen aufgerichteter Stellung (sog. "Arbeitsstellung") den zwischen beiden Handläufen verbleibenden Zwischenraum durchgängig überbrückt sowie für das Bedienpersonal leicht greif- und betätigbar ist.

Durch geeignete Anordnung der gekoppelten Teilelemente zueinander kann erreicht werden, dass das Verbindungselement in abgeklappter Stellung des Geländers (sog. "Ruhestellung") querliegend in den von der Aufstiegshilfe auf die Lauf- bzw. Arbeitsbühne führenden Ausstieg hineinragt und auf diese Weise versperrt.

Eine sinnvolle Ausführungsvariante des erfinderischen Konzepts sieht vor, dass mindestens eines der beiden Teilelemente auf seiner der Ankopplung des Verbindungselementes zum Handlauf des Geländers abgewandten Längsseite mit einem rechteck-, halbbogen- oder parabelförmig vom Teilelement abstehenden Rohrsegment ausgestattet ist. Dies erleichtert zum einen die Greif- und Betätigbarkeit des Verbindungselementes durch das Bedienpersonal. Durch eine entsprechend groß gewählte Dimensionierung kann darüber hinaus aber auch erreicht werden, dass das Verbindungselement bei einem in "Arbeitsposition" aufgerichtetem Geländer soweit in den freien Raum oberhalb der Aufstiegshilfe hineinragt, dass nur noch eine schmale Durchtrittsöffnung für das Bedienpersonal verbleibt. Auf diese Weise wird das Risiko eines versehentlichen Sturzes durch die derart verschmälerte Durchtrittsöffnung stark herabgesetzt.

Der Erfindungsgedanke wird in nachfolgenden Figuren verdeutlicht. Es zeigen:
- **Figur 1**: perspektivische Ansicht der oberen Ladefläche eines doppelstöckigen Autotransportfahrzeuges mit beidseitig in Fahrzeug-Längsrichtung angeordneten Geländern
- **Figur 2**: Detailansicht des Geländers im Bereich der seitlich am Fahrzeug angeordneten Aufstiegshilfe

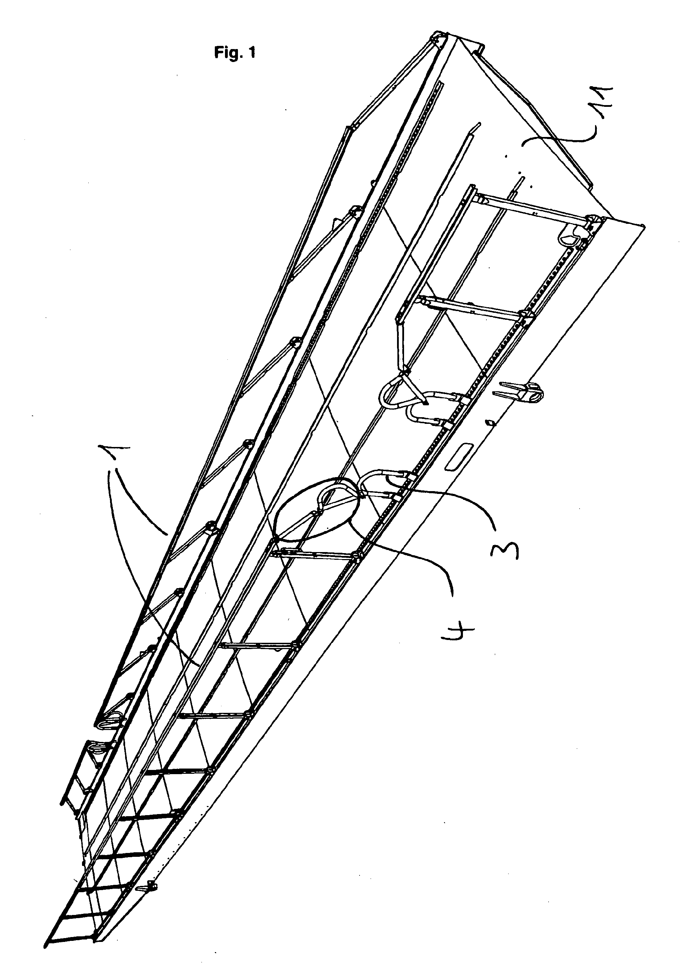

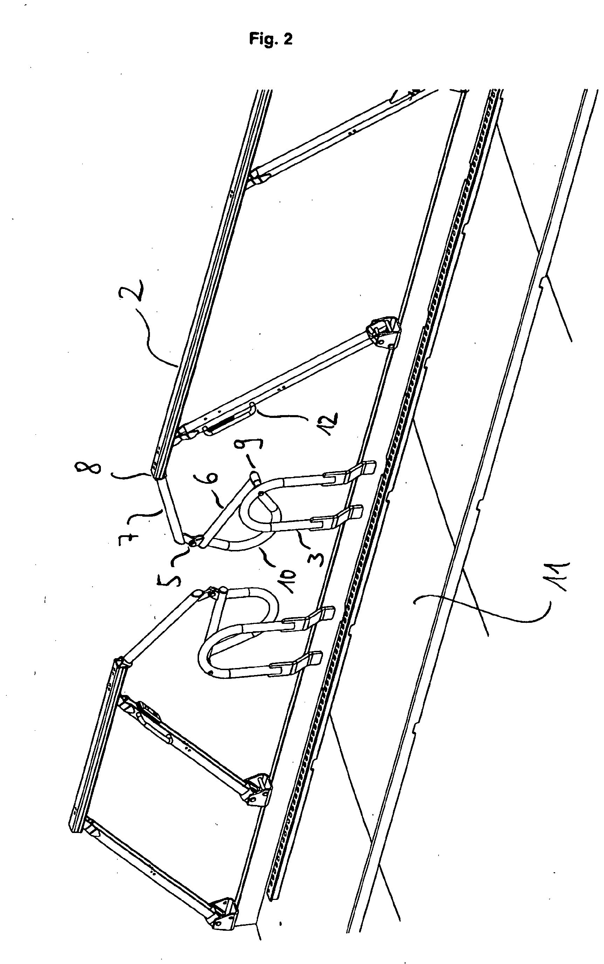

In Figur 1 ist eine perspektivische Ansicht der oberen Ladefläche (11) eines doppelstöckigen Autotransportfahrzeuges mit beidseitig in Fahrzeug-Längsrichtung angeordneten Geländern (1) dargestellt. Im Ausführungsbeispiel handelt es sich um ein Schienenfahrzeug; die Erfindung ist aber in identischer Weise auch auf Straßenfahrzeuge anwendbar. Das Fahrzeug weist an beiden Seiten jeweils eine Aufstiegshilfe auf, welche einer Sprossenleiter ähnelt und von der in den beiden Figuren 1 und 2 nur jeweils die oberhalb der Ladefläche angeordneten Abschlüsse der Handläufe (3) dargestellt sind. Das in Blickrichtung vordere Geländer befindet sich in aufrechter Arbeitsstellung; das in Blickrichtung hintere Geländer befindet sich zum Zwecke der besseren Darstellbarkeit der Erfindung in einer schrägen Zwischenstellung zwischen aufgerichteter bzw. hoher Arbeits- und abgeklappter bzw. tiefliegender Ruhestellung. Im Bereich jedes Austritts bzw. Übergangs von der Aufstiegshilfe auf die Ladefläche ist das Geländer unterbrochen, damit dem Bedienpersonal ein Zutritt zur Ladefläche möglich ist.

Figur 2 zeigt eine Detailansicht des Geländers im Bereich einer seitlich am Fahrzeug angeordneten Aufstiegshilfe mit einem in Blickrichtung rechts von der Aufstiegshilfe angeordneten ersten Geländer sowie einem in Blickrichtung links von der Aufstiegshilfe angeordneten zweiten Geländer, die spiegelsymmetrisch zueinander angeordnet sind. Das klappbare Geländer (1) weist einen Handlauf (2) auf, der mittels eines Verbindungselementes (4) mit dem Handlauf (3) der Aufstiegshilfe mechanisch gekoppelt ist. Jedes Verbindungselement besteht aus zwei miteinander drehgelenkig gekoppelten (5) Teilelementen (6, 7), welche an einem ersten Ende eine drehgelenkige Ankopplung (8) zum Handlauf (2) des Geländers und an einem zweiten Ende eine drehgelenkige Ankopplung (9) zum Handlauf (3) der Aufstiegshilfe aufweisen. Die Drehachsen der Drehgelenke (5, 8, 9) sind zueinander parallel ausgerichtet. Zudem weist das tiefer liegende Teilelement (6) auf seiner der Ankopplung (8) des Verbindungselementes (7) zum Handlauf (2) des Geländers abgewandten Längsseite ein parabelförmig vom Teilelement abstehendes Rohrsegment (10) auf.

Beim Klappen des Geländers von der Ruhe- in die Arbeitsstellung (bzw. in umgekehrter Richtung) wird das tiefer liegende Teilelement (6) rotatorisch um den am Handgriff (3) der Aufstiegshilfe fixierten Drehpunkt (9) verschwenkt. Dabei werden die Gelenkverbindung (5) der beiden Teilelemente (6, 7) sowie die Ankopplung (8) des Teilelementes (7) an den Handlauf (2) des Geländers solange nach oben ausgelenkt bis die aufrechte Arbeitsstellung des Geländers erreicht ist. In dieser Arbeitsstellung sind das erste Teilelement (6) näherungsweise vertikal und das zweite Teilelement (7) näherungsweise horizontal ausgerichtet. Mittels eines zusätzlichen Handgriffs (12) an der der Aufstiegshilfe nächstliegenden Stütze des Geländers kann die Aufstellbewegung durch das Bedienpersonal zusätzlich unterstützt werden. Das parabelförmige Rohrsegment (10) ragt dann in den freien Raum oberhalb der Aufstiegshilfe hinein. Nach Aufstellen des zweiten, in Blickrichtung links von der Aufstiegshilfe angeordneten Geländers verbleibt zwischen den beiden Rohrsegmenten nur noch eine schmale Not-Durchtrittsöffnung für das Bedienpersonal.

### Bezugszeichenliste:

- 1: klappbares Geländer
- 2: Handlauf des Geländers
- 3: Handlauf der Aufstiegshilfe
- 4: Verbindungselement
- 5: Drehgelenk zur Verbindung der Teilelemente (6) und (7)
- 6: erstes Teilelement des Verbindungselementes (4)
- 7: zweites Teilelement des Verbindungselementes (4)
- 8: Drehgelenk zwischen Handlauf (2) und Teilelement (7)
- 9: Drehgelenk zwischen Handlauf (3) und Teilelement (6)
- 10: Rohrsegment
- 11: obere Ladefläche eines Autotransportwagens
- 12: Handgriff

## Patentansprüche

1. Lauf- oder Arbeitsbühne mit klappbarem Geländer und Aufstiegshilfe, deren Handläufe mittels eines Verbindungselementes mechanisch gekoppelt sind,
**dadurch gekennzeichnet, dass**
das Verbindungselement (4) aus zwei miteinander in einem Gelenk (5) drehbar
gekoppelten Teilelementen (6, 7) besteht, wobei das erste Teilelement (7) an einem ersten zum Gelenk (5) distal angeordneten Ende eine drehgelenkige Ankopplung (8) zum Handlauf (2) des Geländers und das zweite Teilelement (6) an einem zweiten zum Gelenk (5) distal angeordneten Ende eine drehgelenkige Ankopplung (9) zum Handlauf (3) der Aufstiegshilfe aufweist, wobei die Drehachsen der Drehgelenke (5, 8, 9) zueinander parallel ausgerichtet sind.

2. Lauf- oder Arbeitsbühne mit klappbarem Geländer und Aufstiegshilfe nach Patentanspruch 1, **dadurch gekennzeichnet, dass** mindestens eines der beiden Teilelemente (6, 7) auf seiner der Ankopplung (8) des Verbindungselementes (7) zum Handlauf (2) des Geländers abgewandten Längsseite mit einem rechteck-, halbbogen- oder parabelförmig vom Teilelement abstehenden Rohrsegment (10) ausgestattet ist.

3. Fahrzeug mit mindestens einer für den Transport von Kraftfahrzeugen ausgestalteten Ladefläche (11), deren Lauf- oder Arbeitsbühne mit einem klappbarem Geländer (1) und einer Aufstiegshilfe (3) nach einem der Patentansprüche 1 oder 2 ausgeführt ist.

## Claims

1. A service or working platform with a hinged railing and a climbing aid, the handrails of which are mechanically coupled by means of a connecting element,
**characterized in that**
the connecting element (4) consists of two sub-elements (6, 7) that are pivotably coupled to one another in a pivot joint (5), wherein the first sub-element (7) is pivotably coupled (8) to the handrail (2) of the railing on a first end that is arranged distal to the pivot joint (5) and the second sub-element (6) is pivotably coupled (9) to the handrail (3) of the climbing aid on a second end that is arranged distal to the pivot joint (5), wherein the pivoting axes of the pivot joints (5, 8, 9) are aligned parallel to one another.

2. The service or working platform with a hinged railing and a climbing aid according to claim 1, **characterized in that** at least one of the two sub-elements (6, 7) is equipped with a pipe segment (10) that rectangularly, semicircularly or parabolically protrudes from the sub-element on its longitudinal side that faces away from the coupling (8) of the connecting element (7) to the handrail (2) of the railing.

3. A vehicle with at least one loading area (11) that is designed for the transport of motor vehicles and the service or working platform of which is realized with a hinged railing (1) and a climbing aid (3) according to one of claims 1 or 2.

## Revendications

1. Plateforme de circulation ou de travail à rampe rabattable et à système d'aide à l'accès, dont les mains courantes sont couplées mécaniquement au moyen d'un mécanisme de liaison,
**caractérisée en ce que**
l'élément de liaison (4) est composé de deux sous-éléments (6, 7) couplés l'un à l'autre en rotation par une articulation (5), le premier sous-élément (7) présentant, au niveau d'une extrémité disposée distalement par rapport à l'articulation (5), un accouplement à rotule (8) avec la main courante (2) de la rampe et le second sous-élément (6) présentant à une seconde extrémité disposée distalement par rapport à l'articulation (5) un accouplement à rotule (9) avec la main courante (3) du système d'aide à l'accès, les axes de rotation des articulations rotatives (5, 8, 9) étant dirigés parallèlement les uns aux autres.

2. Plateforme de circulation ou de travail à rampe rabattable et à système d'aide à l'accès selon la revendication 1 du brevet, **caractérisée en ce qu'**au moins un des deux sous-éléments (6, 7) est équipé, sur sa face longitudinale détournée de l'accouplement (8) de l'élément de liaison (7) avec la main courante (2) de la rampe, d'un segment tubulaire (10) en forme de rectangle, de demi-arc de cercle ou de parabole dépassant du sous-élément.

3. Véhicule comportant au moins une surface de chargement (11) équipée pour le transport de véhicules automobiles, dont la plateforme de circulation ou de travail est réalisée avec une rampe rabattable (1) et un système d'aide à l'accès (3) selon une des revendications 1 ou 2 du brevet.
